# EUROPEAN PATENT SPECIFICATION

(11) **EP 4 034 449 B1**
(45) Date of publication and mention of the grant of the patent: **19.07.2023**
(21) Application number: 20781121.7
(22) Date of filing: 24.09.2020
(51) Int. Cl.: B62B 3/02, B62B 5/04, B62B 5/06, B62B 3/14

(54) **FOLDABLE PLATFORM TRUCK WITH A BRAKE CONTROLLABLE BY A SWIVABLE U-SHAPED HANDLE**
FALTBARER PLATTFORMWAGEN MIT EINER DURCH EINEN SCHWENKBAREN SCHIEBEGRIFFBÜGEL BETÄTIGBAREN BREMSE
CHARIOT TRANSPORTEUR PLIABLE AVEC UN FREIN COMMANDÉ PAR UNE POIGNÉE PIVOTANTE EN FORME DE U

(30) Priority: 25.09.2019 NL 2023896
(43) Date of publication of application: 03.08.2022
(73) Proprietor: Matador Exploitatie B.V., 5268 AS Helvoirt (NL)
(72) Inventor: BELGERS, Paul Anton Gerard Marie, 5268 AS Helvoirt (NL)
(74) Representative: Patentwerk B.V.
(86) International application number: PCT/NL2020/050589
(87) International publication number: WO 2021/060982

(56) References cited:
- WO-A1-2015/126086
- JP-A- 2001 219 851
- JP-A- 2007 030 554
- JP-A- 2012 001 040
- JP-A- 2018 043 619
- JP-U- S54 150 270
- US-A- 6 024 376
- US-A1- 2005 275 179

## Description

The present invention relates to a foldable platform truck, comprising at least one bearing surface supported by at least three wheels; a foldable operating bracket that on one side is rotatable attached to the at least one bearing surface an on the opposite free side has a gripping handle; a lock for securing the operating bracket in at least an unfolded operating locking position (state); and a control for controlling the operating bracket lock. Such a generic foldable platform truck is e.g. known from document JP S54 150 270 U.

Such foldable platform trucks are for instance also known under various other denotations, for instance as "platform hand truck", "flat surfaced transport dolly with a foldable operating bracket", "folding handle platform truck", "folding platform trolley", and "folding handle platform cart". These type of transport carts are used in multiple applications for transporting various products (like boxes, buckets, bags and so on) in (business)spaces, from and to larger means of transport (such as cars, delivery vans and trucks) and to and from stock locations and consumption locations. As the platform truck according the invention is also foldable it is possible to store the truck with limited use of space which makes the platform truck also very easy to store and also suitable to take along with a larger means of transport. The existing foldable platform trucks function well but are limited in their uses as they are relatively heavy, limited adjustable and not always easy to control.

It is therefore the object of the present invention to provide an alternative foldable platform truck that obviates the above drawbacks, and/or that provides a suitable alternative for the purpose of rolling transport of a load which has at least, but preferably more, functionality than the prior art foldable platform carts.

The invention as defined in independent claim 1 provides for this purpose a foldable platform truck, comprising a bearing surface supported by at least three wheels; a foldable operating bracket that on one side is rotatable attached to the bearing surface an on the opposite free side has a gripping handle; a lock for securing the operating bracket in at least an unfolded operating locking position; and a control for controlling the operating bracket lock; wherein the operating bracket is also provided with a brake that is contacting at least one of the wheels when the operating bracket is moved from an unfolded operating position to a farther opened position. The bearing surface may be a fully closed or partially open support base for carrying the products to be transported. The bearing surface may also be carried by a frame or even embedded in a frame, in this application a combined frame and bearing surface will also be referred to as a bearing surface (but thus may well be just a single plate like element or a combination of a plate like element and a support/carrying frame), both alternative variants are included in this application. The operating bracket is moveable between at least two positions (or states) a collapsed state - in which the bracket more or less abuts the bearing surface and the space of the platform truck is therefore limited - and an operating position - wherein the operating bracket is swivelled open and the operating bracket thus encloses a corner with the bearing surface. When moving the platform truck by pushing and/or pulling on the gripping handle of the operating handle the operating bracket normally will be in an operating position. In that operating position the operating bracket is thus preferably locked in its position so the forces exerted on the gripping handle may be forwarded directly to the bearing surface supported by the wheels providing an operator good control of the position of the platform truck. To activate or deactivate the locking of the position of the operating handle the truck also has a control that controls the operating of a bracket lock. However not only the locking of the position of the operating handle the present invention provides also the opportunity to block (or lock) the position of at least one of the wheels supporting the bearing surface. Blocking at least one of the wheels enables to safeguard or guarantee that the platform truck stay stationary on a specific position, for instance when an operator lets the gripping handle of the operating bracket go. This functionality of blocking at least one of the wheels is especially advantageous when a surface whereon the platform truck stands is not completely flat. The brake that may contact at least one of the wheels and that thus enables the blocking of that wheels is combined with the operating bracket. This simple construction enables the operation of the brake by moving the operating bracket (seen from the bearing surface in a backward direction) from an unfolded operating position to a farther opened position. This is not only an ergonomically advantageous solution but it also saves weight, reduces the number of parts required and limits costs.

In an embodiment the lock for securing the operating bracket is provided with at least two different unfolded operating locking positions. The option of various unfolded operating locking positions enables a positioning of the operating bracket that is adapted to specific circumstances. For instance in using the foldable platform truck according the present invention in a limited space the operating bracket may be locked in a substantially vertical position while in circumstances where more space is available a further opened, easier operating position is preferred.

The lock for securing the operating bracket may also be provided with a locking position wherein the operating bracket is swivelled to the bearing surface. Such additional locking position enables the securing of the operating bracket also in the collapsed (folded) state that for instance provides additional safety during transport of a collapsed foldable platform truck. Enabling a locked collapsed state of the platform truck according the present invention also limits the finger squeezing risk.

A further simplification of the structure may be obtained when the brake is a brake element (26) integrated with the lock for securing the operating bracket.

In yet another embodiment of the platform truck according the present invention the lock for securing the operating bracket comprises a rotatable disk provided with at least one engagement opening for engagement with the operating bracket. By bringing the engagement opening in contact with the operating bracket (or a dedicated locking part attached to the operating bracket) the locking function is realised. When plural engagement openings are provided in the rotatable disk also plural locked positions of the operating bracket may be secured. The disk construction of the coupling has limited dimensions and is thus not limiting the transport capabilities of the platform truck.

In case the rotatable disk of the lock also comprises a protruding peripheral part for contacting and blocking a wheel the rotatable disk may function as a brake to block rotation of at least one of the wheels. By blocking at least two wheels also a blocking against turning of the platform truck will be guaranteed. The positioning and dimensioning of the wheel to be blocked and the rotatable disk must then be such that by (further) rotation of the disk the protruding part comes in contact with the wheel so that it is blocked..

The control for the operating bracket lock may be a foot control (like a foot pedal) and/or may be a control handle attached to the gripping handle of the operating bracket. When the control of the lock is a foot control the operating bracket is very simple of construction and may even be combined with an axle of the wheels to save materials and weight. However in case a control handle is desired out of preference of an operator such may also simply be realised.

When the operating bracket comprises an open loop also lager/longer objects may be transported on the platform truck as these object may partially stick out through the opening in the operating bracket. However for reinforcement also a cross bandage in the operating bracket may be provided.

In a specific embodiment the foldable platform truck may also comprises an electric drive. Such electric drive simplifies the movement of the platform truck which is specifically desired for transport over longer distances, on uneven floors and with heavy loads. Such electric drive may be embodied as a drive that drives at least two wheels and which includes a differential coupling, like for instance an electric differential coupling. Such dual wheel drive enables an even an straight movement of the platform truck.

An enhanced stability of the operating bracket may be realised by using an oval tube for the manufacture of the operating bracket. It may further be advantageous to use magnesium reinforced aluminium as a construction material for the operating bracket as this material combines relative high strength with a relative low weight. Especially magnesium reinforced welded aluminium oval tubes are advantageous to be used as construction material for the production of the operating bracket. The wheels rims may advantageously be made out of cast aluminium, this again saves weight and prevents stress corrosion. For a smooth running of the wheels they may be rubber tyred, preferably with a round shaped contact surface for light running.

In yet a further embodiment the bearing surface may be provided with at least one buffering wheel, which buffering wheel has an axis of rotation that is perpendicular to the bearing surface ant that at least partially protrudes from the peripheral edge of the bearing surface at the side of the bearing surface facing away from the side of the bearing surface where the foldable operating bracket is rotatable attached. One or more of such buffering wheels are advantageous for protection of furniture, walls etc. and for easy passage of obstacles with the platform truck.

The present invention will be further elucidated on the basis of the non-limitative exemplary embodiments shown in the following figures, wherein:
figure 1A shows a perspective view of a foldable platform truck according the present invention in a first operative position;
figure 1B shows a side view of the foldable platform truck as show in figure 1A;
figure 2A shows a perspective view of the foldable platform truck as shown in figure 1A in a second - compact - operative position;
figure 2B shows a side view of the platform truck in the compact operative position as show in figure 2A;
figure 3A shows a perspective view of the foldable platform truck as shown in figures 1A and 2A now in a third blocked (non-operative) position;
figure 3B shows a side view of the platform truck in the blocked (non-operative) position as show in figure 3A;
figure 4 shows a side view of the foldable platform truck as shown in pervious figures in a collapsed position;
figures 5A - 5D shows detailed views of an operating bracket lock in various positions of the platform truck as shown in successively the figures 1A (the first operative position), 2A (the second - compact - operative position), 3A (the third - blocked (non-operative) position) and 4 (the collapsed position).

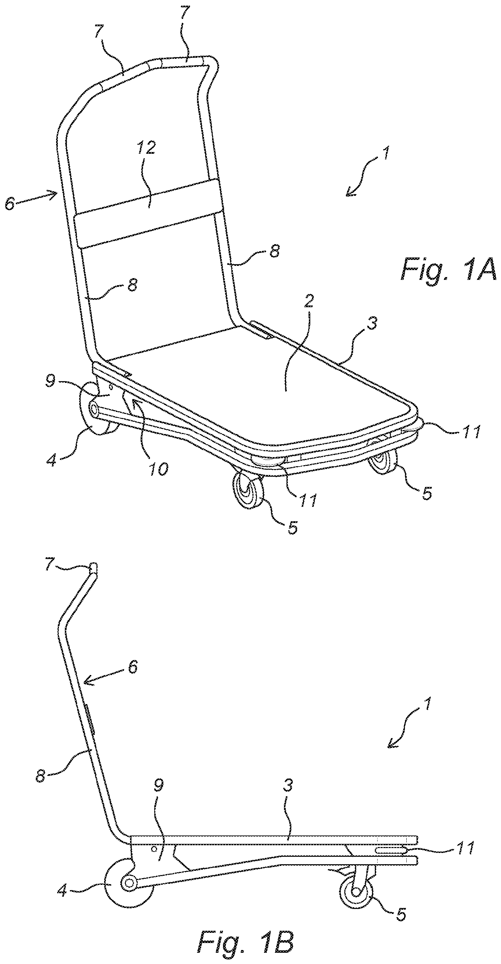

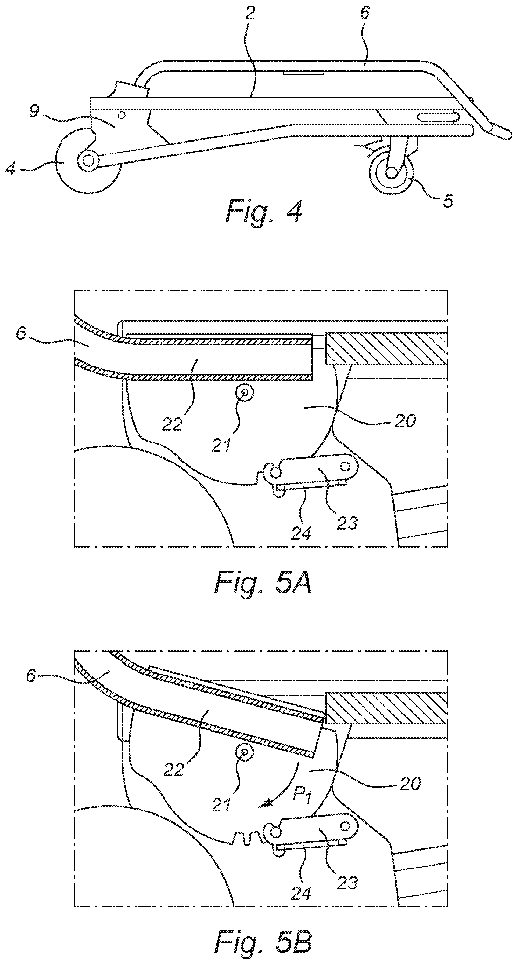

In figure 1A a foldable platform truck 1 according the present invention is shown in a first operative position. The foldable truck 1 comprises a bearing surface 2 that is carried by a frame 3 which at its turn is supported by four wheels 4, 5 (only three wheels are visible in this figure). The bearing surface 2 may be optimised dependent on the specific use of the platform truck 1; for instance a light weight honeycomb bearing surface may be advantageous, the bearing surface may be fibre reinforced, may have an anti-slip deck and/or may be high impact resistant. The front wheels 5 are castors 5 (swiveling wheels) and the rear wheels 4 are non-swiveling wheels 4. The platform truck also has an operating bracket 6 that on one side is rotatable attached to the frame 3 holding the bearing surface 2. On the side opposite the bearing surface 2 the operating bracket 6 has gripping handles 7. Here the gripping handles 7 are located more inwards relative to upright sides 8 of the operating bracket 6 to protect the hands of an operator. Furthermore the handles 7 may be ergonomic to avoid excessive load and optimising zero position of the arms and wrists of an operator. The operating handle 7 has the shape of a loop and is here strengthened by cross bandage 12. The platform truck 1 also has a lock 9 for securing the operating bracket 6 in various positions, this lock will be clarified in more detail in relation to the figures 5A - 5D. A control 10 for controlling the operating bracket lock 9 is realised as a foot pedal 10. By pushing down the foot pedal 10 the operating bracket lock 9 will be released and when letting the foot pedal 10 go a spring (to be shown later) will move the operating bracket lock 9 back in its locking position. In an unlocked state the position of the operating bracket 6 towards the bearing surface 2 (and the frame 3) may be modified. The platform truck 1 also has two (horizontal) buffering wheels 11 attached on the front of the bearing surface 2 / frame 3. These buffering wheels 11 may be useful as protection and prevent the platform truck 1 getting stuck behind obstacles.

In figure 1B the foldable platform truck 1 as shown in figure 1A is now show in a side view. The operating bracket 6 is in a position that the platform truck 1 can easily be pushed on by an operator and the bearing surface 2 can be loaded without too much hindrance from the operating bracket 6. The foldable platform truck 1 can easily be ridden in the position of the operating bracket 6 as shown in the figures 1A and 1B.

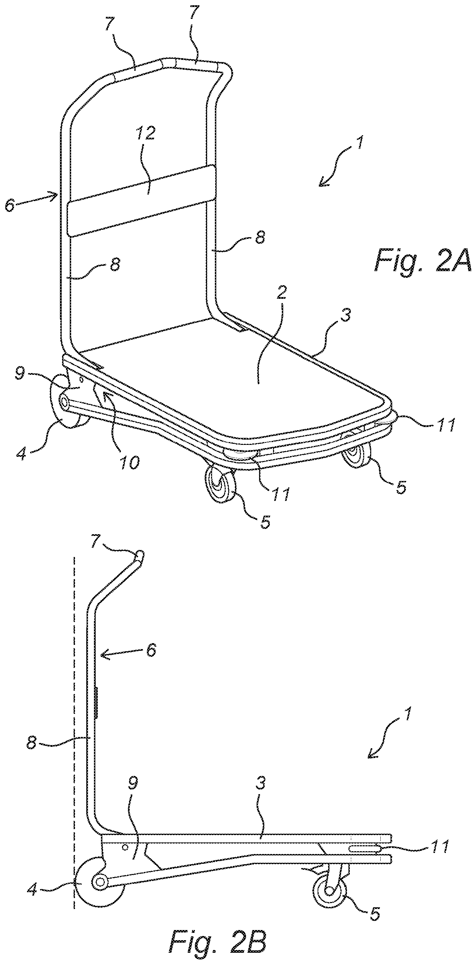

In figure 2A the operating bracket 6 of the foldable platform truck 1 is in an upright position, and compared to the situation depicted in the figures 1A and 1B partly rotated towards the bearing surface 2. In the upright position of the operating bracket 6 the platform truck is in a compact but still an operative position. An operator may thus move the platform truck 1 but it will be less easy to move than in the previous (figs. 1A and 1B) situation. The reason to use the platform truck 1 in this compact situation may be that there is limited space. A further advantage of this - compact - position is , as visible in figure 2B, that the back side of the rear wheels 4 are forming the most backward part of the platform truck 1 enabling to relatively easy drive the platform truck 1 back over a road obstacle like a sidewalk edge. This is also an option in other positions of the operating bracket 6. Also clearly visible here is that the frame 3 has a double construction not only providing additional strength but also enabling to attach straps or other fasteners for a load onto the frame 3.

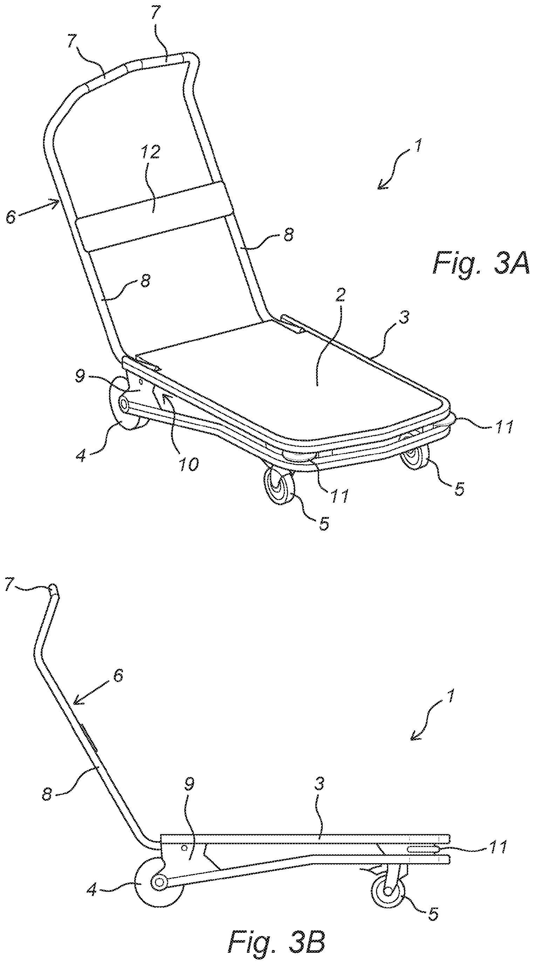

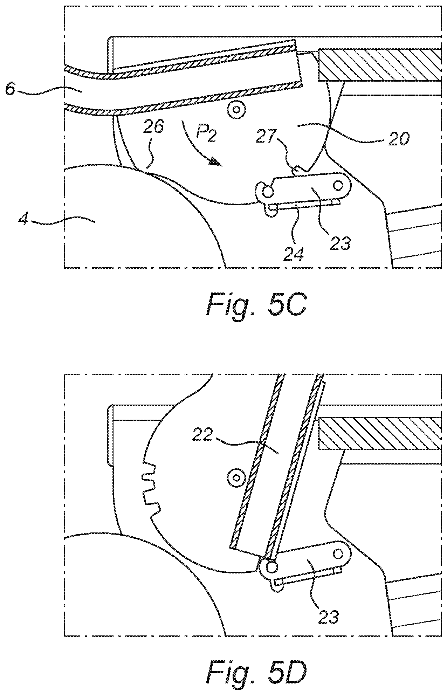

In figure 3A the operating bracket 6 of the foldable platform truck 1 is in a position wherein the back wheels are blocked (a braking function is activated). By moving the operating bracket 6 more away from the bearing surface 2 compared to the situations depicted in the figures 1A, 1B, 2A and 2B the operating bracket lock 9 is now working as a brake that is contacting at least one of the back wheels 4. This will be further clarified in reference to figure 5C. Figure 3B shows the platform truck 1 with the operating bracket 6 in the back wheels 4 blocking function in a side view.

Figure 4 shows a side view of the transport truck 1 in the collapsed (or folded) position. The operating bracket 6 (after unlocking the operating bracket lock 9) is moved towards the bearing surface 2. This limits the space required by the transport truck 1 and may thus be useful during storage and/or unloaded movement of the transport truck 1. The design of the transport truck 1 also allows the transport truck 1 to be supported on one side in a stable orientation and the transport truck 1 may even also be used for transportation purposes, e.g. when only a limited height is available.

Figure 5A shows a detailed view of the operating bracket lock 9 embodied as a rotatable latching disk 20 located close to a black wheel 4. The disk 20 has a pivoting point 21 and a lower side 22 of the operating bracket 6 is stationary connected with the disk 20. A blocking pin 23 is biased against the disk 20 with a tensioning spring 24. By moving the foot pedal 10 (as depicted in figure 1A) the blocking pin 23 is moved (against the force exerted by the tensioning spring 24) away from the rotatable latching disk 20 and so allows the disk 20 to be rotated (by moving the operating bracket 6). The position of the disk as depicted in figure 5A corresponds with the operative position as shown in figures 1A and 1B. The blocking pin 23 blocks the disk against rotation so the operating bracket 6 is in a blocked operative position.

In figure 5B the rotatable latching disk 20 is in a position corresponding with the compact operative position as depicted in the figures 2A and 2B. When comparing the position of the rotatable latching disk 20 is turned in the direction of arrow P₁ after the disk has been released by the blocking pin 23 (and thus after the foot pedal 10 has been moved downwards to a "release position"). The operating bracket 6 is now more upright and the blocking pin 23 is engaging with a corresponding opening in the circumference of the disk 20.

In figure 5C the rotatable latching disk 20 is in a position corresponding with a blocked (non-operative) position wherein the back wheels 4 are blocked by a protruding part 26 of the circumference of the rotatable latching disk 20. The disk 20 now directly contacts the back wheel 4 and is blocking a free rotation of the back wheel 4. When comparing the position of the rotatable latching disk 20 with the situation depicted in the figures 5A and 5B the disk is moved here in the direction of arrow P₂ corresponding with a 'backward" movement of the operating bracket 6, thus further away from the bearing surface 2. In this picture is also an opening 27 in the circumference of the disk 20 visible that is contacted by the blocking pin 23 in the compact operative position as shown in figure 5B.

Finally figure 5D shows the rotatable latching disk 20 in a position corresponding to the collapsed position of the operating bracket 6 and as shown in figure 4. The back wheel 4 is now free from the latching disk 20 so the back wheel 4 is not blocked. However in case a blocked (non-rotation) functionality of the back wheel 4 is required in the collapsed situation of the transport truck 1 a simple additional protruding part of the latching disk 20 is required at the circumference of the disk 20 that is most close to the back wheel 4 in figure 5D.

## Claims

1. Foldable platform truck (1), comprising:
- at least one bearing surface (2) supported by at least three wheels (4, 5);
- a foldable operating bracket (6) that on one side is rotatable attached to the at least one bearing surface (2) and on the opposite free side has a gripping handle (7);
- a lock (9) for securing the operating bracket in at least one unfolded operating locking position; and
- a control (10) for controlling the operating bracket lock (9);
**characterized in that** the operating bracket (6) is also provided with a brake that is contacting at least one of the wheels (4) when the operating bracket (6) is moved from an unfolded operating position to a farther opened position.

2. Foldable platform truck (1) according to claim 1, **characterised in that** the lock (9) for securing the operating bracket (6) is provided with at least two different unfolded operating locking positions.

3. Foldable platform truck (1) according to claim 1 or 2, **characterised in that** the lock (9) for securing the operating bracket (6) is provided with a locking position wherein the operating bracket (6) is swivelled to the bearing surface (2).

4. Foldable platform truck (1) according to any of the preceding claims, **characterised in that** the brake is a brake element integrated with the lock (9) for securing the operating bracket (6).

5. Foldable platform truck (1) according to any of the preceding claims, **characterised in that** the lock (9) for securing the operating bracket (6) comprises a rotatable disk (20) provided with at least one engagement opening (27) for engagement with the operating bracket (6).

6. Foldable platform truck (1) according to claim 5, **characterised in that** the rotatable disk (20) of the lock (9) also comprises a protruding peripheral part (26) for contacting and blocking a wheel (4).

7. Foldable platform truck (1) according to any of the preceding claims, **characterised in that** the control for the operating bracket lock (9) is a foot control (10).

8. Foldable platform truck (1) according to any of the preceding claims, **characterised in that** the control for the operating bracket lock (9) is a control handle attached to the gripping handle (7) of the operating bracket (6)

9. Foldable platform truck (1) according to any of the preceding claims, **characterised in that** the operating bracket (6) comprises an open loop,

10. Foldable platform truck (1) according to any of the preceding claims, **characterised in that** the foldable platform truck also comprises an electric drive.

11. Foldable platform truck (1) according to claim 10, **characterised in that** the electric drive drives at least two wheels and the drive comprises a differential coupling.

12. Foldable platform truck (1) according to any of the preceding claims, **characterised in that** the operating bracket (6) is formed by an oval tube,

13. Foldable platform truck (1) according to any of the preceding claims, **characterised in that** the operating bracket (6) is at least partially made out of magnesium reinforced aluminium.

14. Foldable platform truck (1) according to any of the preceding claims, **characterised in that** the wheels (4, 5) rims are made out of cast aluminium,

15. Foldable platform truck (1) according to any of the preceding claims, **characterised in that** the bearing surface (2) is provided with at least one buffering wheel (11), which buffering wheel (11) has an axis of rotation that is perpendicular to the bearing surface (2) and that at least partially protrudes from the peripheral edge of the bearing surface (2) at the side of the bearing surface (2) facing away from the side of the bearing surface (2) where the foldable operating bracket (6) is rotatable attached.

## Patentansprüche

1. Einklappbarer Plattformwagen (1), umfassend:
- mindestens eine Auflagefläche (2), die durch mindestens drei Räder (4, 5) getragen wird;
- einen einklappbaren Betätigungsbügel (6), der auf einer Seite drehbar an der mindestens einen Auflagefläche (2) angebracht ist und auf der gegenüberliegenden freien Seite einen Haltegriff (7) aufweist;
- eine Verriegelung (9) zum Sichern des Betätigungsbügels in mindestens einer ausgeklappten Betätigungsverriegelungsposition; und
- eine Steuerung (10) zum Steuern der Betätigungsbügelverriegelung (9);
**dadurch gekennzeichnet, dass** der Betätigungsbügel (6) außerdem mit einer Bremse versehen ist, die mit mindestens einem der Räder (4) in Kontakt kommt, wenn der Betätigungsbügel (6) von einer ausgeklappten Betätigungsposition in eine weiter geöffnete Position bewegt wird.

2. Einklappbarer Plattformwagen (1) nach Anspruch 1, **dadurch gekennzeichnet, dass** die Verriegelung (9) zum Sichern des Betätigungsbügels (6) mit mindestens zwei unterschiedlichen ausgeklappten Betätigungsverriegelungspositionen versehen ist.

3. Einklappbarer Plattformwagen (1) nach Anspruch 1 oder 2, **dadurch gekennzeichnet, dass** die Verriegelung (9) zum Sichern des Betätigungsbügels (6) mit einer Verriegelungsposition versehen ist, in der der Betätigungsbügel (6) zu der Auflagefläche (2) geschwenkt ist.

4. Einklappbarer Plattformwagen (1) nach einem der vorhergehenden Ansprüche, **dadurch gekennzeichnet, dass** die Bremse ein Bremsenelement ist, das in die Verriegelung (9) zum Sichern des Betätigungsbügels (6) integriert ist.

5. Einklappbarer Plattformwagen (1) nach einem der vorhergehenden Ansprüche, **dadurch gekennzeichnet, dass** die Verriegelung (9) zum Sichern des Betätigungsbügels (6) eine drehbare Scheibe (20) umfasst, die mit mindestens einer Eingriffsöffnung (27) zum Eingriff mit dem Betätigungsbügel (6) versehen ist.

6. Einklappbarer Plattformwagen (1) nach Anspruch 5, **dadurch gekennzeichnet, dass** die drehbare Scheibe (20) der Verriegelung (9) außerdem ein hervorstehendes Umfangsteil (26) zum Kontaktieren und Blockieren eines Rads (4) umfasst.

7. Einklappbarer Plattformwagen (1) nach einem der vorhergehenden Ansprüche, **dadurch gekennzeichnet, dass** die Steuerung für die Betätigungsbügelverriegelung (9) eine Fußsteuerung (10) ist.

8. Einklappbarer Plattformwagen (1) nach einem der vorhergehenden Ansprüche, **dadurch gekennzeichnet, dass** die Steuerung für die Betätigungsbügelverriegelung (9) ein Steuergriff ist, der an dem Haltegriff (7) des Betätigungsbügels (6) angebracht ist.

9. Einklappbarer Plattformwagen (1) nach einem der vorhergehenden Ansprüche, **dadurch gekennzeichnet, dass** der Betätigungsbügel (6) eine offene Schlaufe umfasst.

10. Einklappbarer Plattformwagen (1) nach einem der vorhergehenden Ansprüche, **dadurch gekennzeichnet, dass** der einklappbare Plattformwagen außerdem einen Elektroantrieb umfasst.

11. Einklappbarer Plattformwagen (1) nach Anspruch 10, **dadurch gekennzeichnet, dass** der Elektroantrieb mindestens zwei Räder antreibt und der Antrieb eine Differenzialkupplung umfasst.

12. Einklappbarer Plattformwagen (1) nach einem der vorhergehenden Ansprüche, **dadurch gekennzeichnet, dass** der Betätigungsbügel (6) durch ein ovales Rohr gebildet ist.

13. Einklappbarer Plattformwagen (1) nach einem der vorhergehenden Ansprüche, **dadurch gekennzeichnet, dass** der Betätigungsbügel (6) zumindest teilweise aus magnesiumverstärktem Aluminium besteht.

14. Einklappbarer Plattformwagen (1) nach einem der vorhergehenden Ansprüche, **dadurch gekennzeichnet, dass** die Felgen der Räder (4, 5) aus Aluminiumguss bestehen.

15. Einklappbarer Plattformwagen (1) nach einem der vorhergehenden Ansprüche, **dadurch gekennzeichnet, dass** die Auflagefläche (2) mit mindestens einem Pufferrad (11) versehen ist, wobei das Pufferrad (11) eine Drehachse aufweist, die senkrecht zu der Auflagefläche (2) ist, und die zumindest teilweise aus der Umfangskante der Auflagefläche (2) auf der Seite der Auflagefläche (2) ragt, die von der Seite der Auflagefläche (2) abgewandt ist, auf der der klappbare Betätigungsbügel (6) drehbar angebracht ist.

## Revendications

1. Chariot à plate-forme pliable (1), comprenant :
- au moins une surface porteuse (2) supportée par au moins trois roues (4, 5) ;
- un support de fonctionnement pliable (6) qui, sur un côté, est attaché de façon rotative à l'au moins une surface porteuse (2) et, sur le côté libre opposé, a une poignée de préhension (7) ;
- un verrou (9) pour fixer le support de fonctionnement dans au moins une position de verrouillage de fonctionnement dépliée ; et
- une commande (10) pour commander le verrou de support de fonctionnement (9) ;
**caractérisé en ce que** le support de fonctionnement (6) est également pourvu d'un frein qui est en contact avec au moins une des roues (4) lorsque le support de fonctionnement (6) est déplacé d'une position de fonctionnement dépliée à une position ouverte plus éloignée.

2. Chariot à plate-forme pliable (1) selon la revendication 1, **caractérisé en ce que** le verrou (9) pour fixer le support de fonctionnement (6) est pourvu d'au moins deux positions de verrouillage de fonctionnement dépliées différentes.

3. Chariot à plate-forme pliable (1) selon la revendication 1 ou 2, **caractérisé en ce que** le verrou (9) pour fixer le support de fonctionnement (6) est pourvu d'une position de verrouillage dans laquelle le support de fonctionnement (6) est tourné vers la surface porteuse (2).

4. Chariot à plate-forme pliable (1) selon l'une quelconque des revendications précédentes, **caractérisé en ce que** le frein est un élément de frein intégré avec le verrou (9) pour fixer le support de fonctionnement (6).

5. Chariot à plate-forme pliable (1) selon l'une quelconque des revendications précédentes, **caractérisé en ce que** le verrou (9) pour fixer le support de fonctionnement (6) comprend un disque rotatif (20) pourvu d'au moins une ouverture d'entrée en prise (27) pour l'entrée en prise avec le support de fonctionnement (6).

6. Chariot à plate-forme pliable (1) selon la revendication 5, **caractérisé en ce que** le disque rotatif (20) du verrou (9) comprend également une partie périphérique saillante (26) pour entrer en contact avec et bloquer une roue (4).

7. Chariot à plate-forme pliable (1) selon l'une quelconque des revendications précédentes, **caractérisé en ce que** la commande pour le verrou de support de fonctionnement (9) est une commande à pied (10).

8. Chariot à plate-forme pliable (1) selon l'une quelconque des revendications précédentes, **caractérisé en ce que** la commande pour le verrou de support de fonctionnement (9) est une poignée de commande attachée à la poignée de préhension (7) du support de fonctionnement (6).

9. Chariot à plate-forme pliable (1) selon l'une quelconque des revendications précédentes, **caractérisé en ce que** le support de fonctionnement (6) comprend une boucle ouverte.

10. Chariot à plate-forme pliable (1) selon l'une quelconque des revendications précédentes, **caractérisé en ce que** le chariot à plate-forme pliable comprend également un entraînement électrique.

11. Chariot à plate-forme pliable (1) selon la revendication 10, **caractérisé en ce que** l'entraînement électrique entraîne au moins deux roues et l'entraînement comprend un organe de couplage différentiel.

12. Chariot à plate-forme pliable (1) selon l'une quelconque des revendications précédentes, **caractérisé en ce que** le support de fonctionnement (6) est formé par un tube ovale.

13. Chariot à plate-forme pliable (1) selon l'une quelconque des revendications précédentes, **caractérisé en ce que** le support de fonctionnement (6) est au moins partiellement composé d'aluminium renforcé au magnésium.

14. Chariot à plate-forme pliable (1) selon l'une quelconque des revendications précédentes, **caractérisé en ce que** les jantes des roues (4, 5) sont composées de fonte d'aluminium.

15. Chariot à plate-forme pliable (1) selon l'une quelconque des revendications précédentes, **caractérisé en ce que** la surface porteuse (2) est pourvue d'au moins une roue d'amortissement (11), laquelle roue d'amortissement (11) a un axe de rotation qui est perpendiculaire à la surface porteuse (2) et qui fait au moins partiellement saillie à partir du bord périphérique de la surface porteuse (2), sur le côté de la surface porteuse (2) tourné à l'opposé du côté de la surface porteuse (2) où le support de fonctionnement pliable (6) est attaché de façon rotative.
